(19)

**Europäisches Patentamt**
**European Patent Office**
**Office européen des brevets**

(11) **EP 1 549 703 B1**

(12) **FASCICULE DE BREVET EUROPEEN**

(45) Date de publication et mention
de la délivrance du brevet:
**06.03.2013 Bulletin 2013/10**

(51) Int Cl.:
**C08K 3/04** *(2006.01)*

(21) Numéro de dépôt: **03769299.3**

(86) Numéro de dépôt international:
**PCT/EP2003/010521**

(22) Date de dépôt: **22.09.2003**

(87) Numéro de publication internationale:
**WO 2004/030946 (15.04.2004 Gazette 2004/16)**

(54) **ARMATURE DE CARCASSE POUR PNEUMATIQUE DESTINE A PORTER DE LOURDES CHARGES**

KARKASSENVERSTÄRKUNG FÜR SCHWERLASTREIFEN

CARCASS REINFORCEMENT FOR TYRE DESIGNED TO SUPPORT HEAVY LOADS

(84) Etats contractants désignés:
**AT BE BG CH CY CZ DE DK EE ES FI FR GB GR HU IE IT LI LU MC NL PT RO SE SI SK TR**

(30) Priorité: **02.10.2002 FR 0212213**

(43) Date de publication de la demande:
**06.07.2005 Bulletin 2005/27**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeur: **CHAUVIN, Brigitte**
**F-63400 Chamalières (FR)**

(74) Mandataire: **Cohen, Sylvia**
**M.F.P. Michelin,**
**SGD/LG/PI - F35 - Ladoux**
**63040 Clermont-Ferrand (FR)**

(56) Documents cités:
**EP-A- 0 941 871     WO-A-93/18094**
**WO-A-02/092680     WO-A1-02/10265**
**DE-A- 3 636 783     FR-A- 2 535 732**
**US-A- 5 639 817**

**Description**

La présente invention concerne une armature de carcasse pour enveloppe de pneumatique destinée à porter de lourdes charges, telle qu'une enveloppe poids-lourd ou génie civil, et une telle enveloppe poids-lourd ou génie civil.

Les enveloppes à carcasse radiale pour véhicules à moteur portant de lourdes charges, en particulier pour véhicules poids-lourds, comportent des armatures qui sont constituée de renforts ou de nappes de fils métalliques enrobés d'élastomères. Plus précisément, ces enveloppes comportent, dans leur zone basse, une ou plusieurs tringles, une armature de carcasse allant d'une tringle à l'autre et, en leur sommet, une armature de sommet comportant au moins deux nappes de sommet.

Ces enveloppes poids-lourd sont conçues pour pouvoir être rechapées une ou plusieurs fois lorsque les bandes de roulement qu'elles comportent atteignent un degré d'usure critique après un roulage prolongé, ce qui implique de disposer d'une armature de carcasse qui n'a pas subi de dommage significatif, pour chaque enveloppe à rechaper dont la bande de roulement a atteint ce degré d'usure.

Lors de roulages sous forte charge, le « bandeau » de la carcasse (zone centrale située de part et d'autre du plan circonférentiel médian de l'enveloppe) est soumis à des contraintes de flexion pouvant être très élevées, d'où la nécessité de conférer à ce « bandeau » une résistance mécanique élevée, et la zone basse de l'enveloppe (à proximité de chacun des deux retournements de la carcasse) peut être le siège de températures de fonctionnement également très élevées, d'où la nécessité de conférer à cette zone basse une hystérèse réduite.

Par conséquent, dans le but de minimiser la fragilisation de l'enveloppe et de retarder l'apparition de dommages dans celle-ci, une armature de carcasse de type poids-lourd doit être à la fois la plus cohésive possible, pour résister aux sollicitations mécaniques en roulage, et la moins hystérétique possible, pour minimiser l'échauffement en roulage et limiter également l'évolution thermochimique et éventuellement thermo-oxydante des compositions internes.

Il est connu de l'homme de l'art que l'utilisation, dans une composition de caoutchouc pour armature de carcasse poids-lourd et selon une quantité de 50 pce (parties en poids pour cent parties d'élastomère(s)), d'un noir de carbone de grade 300 relativement structuré, tel que le noir N347, ou moins structuré, tel que le noir N326, permet d'améliorer la cohésion, l'endurance et l'hystérèse de cette composition, ce qui confère une durée de vie supérieure à l'armature de carcasse et, par conséquent, à l'enveloppe poids-lourd correspondante.

Il est également connu que les noirs de carbone grossiers, tels que le noir N539, ne confèrent une cohésion suffisante à une composition d'armature de carcasse poids-lourd que si ces noirs sont présents dans cette composition selon une quantité très élevée, ce qui peut avoir pour effet indésirable de pénaliser l'hystérèse de cette composition.

Le document de brevet japonais JP-A-04/274 901 divulgue l'utilisation de noirs de carbone spécifiques dans des compositions de caoutchouc qui sont indifféremment destinées à au moins trois zones distinctes d'une enveloppe de pneumatique présentant spécifiquement une masse réduite, pour conférer à cette enveloppe légère des propriétés de résistance au roulement et de renforcement améliorées, en comparaison de celles présentées par une enveloppe dont les mêmes zones comportent des compositions comprenant chacune un noir de carbone de grade 300.

Ces noirs de carbone spécifiques présentent une surface spécifique $N_2SA$ (mesurée d'après la norme ASTM D3037 de 1984) allant de 60 à 84 $m^2/g$, une valeur de structure « DBP » (mesurée d'après la norme JIS K 6221) allant de 120 à 200 ml/ 100 g et ils présentent une chimie de surface qui est telle que le rapport « $N_2SA/IA$ » de ladite surface spécifique à l'indice d'adsorption d'iode « IA » (également mesuré d'après la norme JIS K 6221) est égal ou supérieur à 1,10.

Le document de brevet japonais JP-A-02/103 268 présente l'utilisation de noirs de carbone pour améliorer les propriétés hystérétiques et de renforcement de compositions de caoutchouc pour armature de carcasse d'enveloppes de pneumatique quelconques, ou encore plus généralement destinées à amortir des vibrations.

Ces noirs de carbone présentent une surface spécifique CTAB (mesurée d'après la norme ASTM D3765-80) allant de 50 à 75 $m^2/g$, une valeur de structure « DBP » (mesurée d'après la norme JIS K 6221) égale ou supérieure à 105 ml/ 100 g et ils présentent une chimie de surface qui est telle que le rapport « $N_2SA/IA$ » de la surface spécifique « $N_2SA$ » (mesurée d'après la norme ASTM D3037-86) à l'indice d'adsorption d'iode « IA » (mesuré d'après la norme JIS K 6221) est égal ou supérieur à 1,10.

On notera que ces deux derniers documents ne concernent pas des enveloppes de pneumatique destinées à porter de lourdes charges, ni *a fortiori* une armature de carcasse de type à câbles métalliques qui est spécifiquement destinée à équiper de telles enveloppes poids-lourd ou génie civil.

Le document WO02/10265 décrit une composition (métal/caoutchouc) comportant une matrice de caoutchouc renforcée par un corps métallique adhérent à la matrice de caoutchouc par l'intermédiaire d'une interphase adhésive.

Le but de la présente invention est de proposer une nouvelle armature de carcasse pour enveloppe de pneumatique destinée à porter de lourdes charges, telle qu'une enveloppe poids-lourd ou génie civil, cette armature comportant un tissu composite qui comprend une composition de caoutchouc réticulable ou réticulée présentant une hystérèse réduite à l'état réticulé et des câbles métalliques renforçant cette composition.

Ce but est atteint en ce que les demanderesses viennent de découvrir d'une manière surprenante que l'association, à une matrice élastomère comprenant du caoutchouc naturel ou un polyisoprène de synthèse à titre majoritaire, d'une charge renforçante comprenant un noir de carbone satisfaisant à la fois aux conditions suivantes :

(i) $45 \leq$ surface spécifique CTAB en $m^2/g$ (selon la norme ASTM D3765-80) $\leq 70$,

(ii) $45 \leq$ surface spécifique BET en $m^2/g$ (selon la norme ASTM D4820-93) $\leq 70$,

(iii) $45 \leq$ indice d'adsorption d'iode IA en mg/g (selon la norme ASTM D1510-81) $\leq 70$

(iv) rapport (surface BET / indice IA) $\leq 1,07$,

(v) $115 \leq$ valeur de structure DBP en ml/ 100 g (selon la norme ASTM D2414-93) $\leq 170$,

(vi) $85$ nm $\leq$ diamètre de Stokes dst en nm $\leq 145$,

où dst est le diamètre d'agrégats correspondant à la fréquence maximale des diamètres de Stokes dans une distribution d'agrégats, et

(vii) D50/dst $\geq 0,0090$. CTAB + 0,19,

où D50 est la différence, dans la distribution d'agrégats, entre les diamètres de Stokes de deux agrégats correspondant à une même fréquence égale à 50 % de la fréquence maximale des diamètres de Stokes, dst et D50 étant mesurés par photo-sédimentométrie centrifuge,

permet d'obtenir une composition de caoutchouc qui présente à l'état réticulé des propriétés hystérétiques améliorées à des déformations élevées, en comparaison des propriétés hystérétiques de compositions connues comprenant un noir de carbone de grade 300 et présentant sensiblement un même module d'allongement à faible déformation.

On notera que l'armature de carcasse selon l'invention comporte un noir de carbone présentant un rapport (surface BET / indice IA) de valeur réduite et un rapport D50/dst qui croît avec la surface spécifique CTAB, ces rapports conférant respectivement aux noirs selon l'invention une chimie de surface et une morphologie particulièrement adaptée.

La matrice élastomère de la composition de caoutchouc selon l'invention peut avantageusement être constituée de caoutchouc naturel ou de polyisoprène de synthèse, ou bien d'un coupage de caoutchouc naturel ou de polyisoprène de synthèse avec un ou plusieurs autres élastomères diéniques.

Dans ce second cas, le caoutchouc naturel ou le polyisoprène de synthèse sont présents à titre majoritaire dans la matrice, c'est-à-dire selon une quantité supérieure à 50 pce (parties en poids pour cent parties d'élastomères). De préférence, le caoutchouc naturel ou le polyisoprène sont présents selon une quantité égale ou supérieure à 70 pce.

Parmi les élastomères diéniques pouvant être utilisés en coupage avec le caoutchouc naturel ou le polyisoprène de synthèse, on peut citer les élastomères diéniques fonctionnels ou non appartenant au groupe constitué par les polybutadiènes, les copolymères de styrène et de butadiène (SBR) préparés en solution ou en émulsion, les copolymères de butadiène et d'isoprène (BIR) et les terpolymères de styrène, de butadiène et d'isoprène (SBIR).

De préférence, le polybutadiène utilisé comprend une majorité d'enchaînements cis-1,4 et le SBR utilisé comprend une majorité d'enchaînements trans-1,4.

Ces élastomères peuvent être modifiés en cours de polymérisation ou après la polymérisation, au moyen d'agents ramifiants tels que le divinylbenzène, ou d'agents de couplage ou d'étoilage tels que des carbonates, des halogéno-étains, des halogéno-siliciums, ou bien encore au moyen d'agents de fonctionnalisation conduisant à un greffage sur la chaîne ou en bout de chaîne de groupes hydroxyle, carbonyle, carboxyle ou bien de groupes amine (par exemple au moyen de la diméthylamino-benzophénone ou de la diéthylamino-benzophénone, à titre d'agent de fonctionnalisation).

Selon une autre caractéristique de l'invention, ledit noir de carbone satisfait en outre à la condition suivante :

(viii) $80 \leq$ valeur de structure DBPC en ml/ 100 g (selon la norme ASTM D3493-91) $\leq 130$, DBPC étant mesurée après 4 compressions à (24 000 psi) 165 MPa.

De préférence, ledit noir de carbone satisfait en outre à la condition suivante :

(ix) $85 \leq$ valeur de structure DBPC en ml/ 100 g $\leq 125$.

De préférence, le noir de carbone utilisé dans la composition selon l'invention satisfait en outre aux trois conditions suivantes :

(x) $50 \leq$ surface spécifique CTAB en $m^2/g \leq 65$,

(xi) $50 \leq$ surface spécifique BET en $m^2/g \leq 65$,

(xii) $50 \leq$ indice d'adsorption d'iode IA en mg/g $\leq 65$.

Egalement à titre préférentiel, ledit noir de carbone satisfait en outre à la condition :

(xiii) rapport (surface BET) / (indice IA) $\leq 1,05$.

Egalement à titre préférentiel, ledit noir de carbone satisfait en outre à la condition :

(xiv) 120 ≤ valeur de structure DBP en ml/ 100 g ≤ 165.

Egalement à titre préférentiel, ledit noir de carbone satisfait en outre à la condition :

(xv) 90 nm ≤ diamètre de Stokes dst en nm ≤ 140.

Egalement à titre préférentiel, ledit noir de carbone satisfait en outre à la condition :

(xvi) D50/dst ≥ 0,0092. CTAB + 0,21.

On mesure les valeurs dst et D50 au moyen d'un photosédimentomètre centrifuge de type « DCP » (Disk Centrifuge Photosedimentometer), qui est commercialisé par la société Brookhaven Instruments. Le mode opératoire est le suivant pour ces mesures :
On sèche un échantillon de noir de carbone, conformément à la norme JIS K6221 (1975). Puis on met en suspension 10 mg de noir de carbone ainsi séché dans 40 ml d'une solution aqueuse à 15 % d'éthanol et 0,05 % d'un agent tensioactifnon ionique (en volume).
On obtient la dispersion de noir de carbone par un traitement aux ultrasons durant 10 minutes, au moyen d'une sonde à ultrasons de 600 Watts. On utilise à cet effet un sonificateur de dénomination « Vibracell ½ pouce » commercialisé par la société Bioblock et réglé à 60 % de sa puissance (soit à 60 % de l'amplitude maximale).
On injecte dans le disque du sédimentomètre, en rotation à 8 000 tours par minute, un gradient composé de 15 ml d'eau (à 0,05 % de tensioactif non ionique) et de 1 ml d'éthanol, puis on injecte 0,30 ml de la suspension de noir de carbone à la surface du gradient. La courbe de distribution en masse de taille d'objet est enregistrée pendant 120 minutes. Un logiciel fournit lesdites valeurs dst et D50 en nm.
Le noir de carbone selon l'invention peut être utilisé seul à titre de charge renforçante, ou bien en coupage avec une charge organique renforçante et/ou une charge inorganique renforçante. La quantité de noir de carbone utilisée peut varier de 30 pce à 70 pce et, de préférence, de 35 à 65 pce.
En cas de coupage avec une charge organique ou inorganique renforçante, ledit noir de carbone est présent à titre majoritaire dans la charge renforçante (i.e. selon une fraction massique supérieure à 50 %). De préférence, la fraction massique de noir de carbone dans la charge renforçante est supérieure à 70 %.
Selon un mode particulièrement avantageux de réalisation de l'invention, la charge organique renforçante comprend un système accepteur/ donneur de méthylène (système dit « A.D.M. »), qui désigne des composés aptes à réagir ensemble pour générer par condensation une résine renforçante tridimensionnelle.
De manière connue, le terme « accepteur de méthylène » désigne le réactant avec lequel le composé donneur de méthylène réagit par formation de ponts méthylène (-CH2-), lors de la cuisson de la composition, conduisant ainsi à la formation *in situ* du réseau résine tridimensionnel. L'accepteur de méthylène doit être apte à se disperser parfaitement dans la matrice élastomère.
Conviennent en particulier à titre d'accepteur de méthylène les phénols, nom générique des dérivés hydroxylés des arènes, et les composés équivalents. Cette définition couvre notamment les monophénols, par exemple le phénol ou hydroxybenzène, les bisphénols, les polyphénols (polyhydroxyarènes), les phénols substitués comme des alkylphénols ou aralkylphénols, par exemple bisphénols, diphénylolpropane, diphénylolméthane, naphtols, crésol, t-butylphénol, octylphénol, nonylphénol, xylénol, résorcinol ou produits analogues.
On utilise de préférence, à titre d'accepteur de méthylène, des résines phénoliques dites « novolaques », encore appelées précondensats phénol-aldéhyde, résultant de la précondensation de composés phénoliques et d'aldéhydes, en particulier de formaldéhyde. De manière connue, ces résines novolaques (dites aussi résines « two-step ») sont thermoplastiques et nécessitent l'emploi d'un agent durcisseur (donneur de méthylène) pour être réticulées, contrairement par exemple aux Résols® qui sont thermodurcissables ; elles présentent une plasticité suffisante pour ne pas gêner la mise en oeuvre de la composition de caoutchouc. Après réticulation par le donneur de méthylène (elles peuvent alors être appelées résines novolaques « thermodurcies »), elles se caractérisent notamment par un réseau tridimensionnel plus serré que celui des Résols®.
La quantité d'accepteur de méthylène doit être comprise entre 1 et 10 pce ; en dessous de 1 pce, l'effet technique visé est insuffisant, alors qu'au-delà de 10 pce, on s'expose à des risques de rigidification trop élevée et de pénalisation excessive de l'hystérèse. Pour toutes ces raisons, une quantité comprise entre 1,5 et 8 pce est plus préférentiellement choisie, des taux compris dans un domaine de 2 à 4 pce étant particulièrement avantageux.
A l'accepteur de méthylène précédemment décrit doit être associé un agent durcisseur, apte à réticuler ou durcir cet accepteur, encore appelé communément "donneur de méthylène".
A titre préférentiel, le donneur de méthylène est choisi dans le groupe constitué par l'hexa-méthylènetétramine (« HMT »), l'hexaméthoxyméthylmélamine (« H3M »), l'hexaéthoxyméthylmélamine, des polymères de formaldéhyde tels que p-formaldéhyde, les dérivés N-méthylol de la mélamine, ou des mélanges de ces composés. Plus préférentiellement, ce donneur est choisi parmi HMT, H3M ou un mélange de ces composés.

La quantité de donneur de méthylène doit être comprise entre 0,5 et 5 pce ; en dessous de 0,5 pce, l'effet technique visé est insuffisant, alors qu'au-delà de 5 pce, on s'expose à des risques de pénalisation de la mise en oeuvre à l'état cru des compositions (par exemple, problème de solubilité de l'HMT) ou de la vulcanisation (ralentissement en présence de H3M). Pour ces raisons, une quantité comprise entre 0,5 et 3,5 pce est plus préférentiellement choisie, des taux compris dans un domaine de 1 à 3 pce étant particulièrement avantageux.

Enfin, la quantité de donneur de méthylène, dans les plages précitées, est avantageusement ajustée de manière à représenter entre 10% et 80%, plus préférentiellement dans un domaine de 40 à 60% en poids par rapport à la quantité d'accepteur de méthylène.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, i.e. capable de remplacer, dans sa fonction de renforcement, une charge conventionnelle de noir de carbone de grade pneumatique.

Préférentiellement, la charge inorganique renforçante est, en totalité ou tout du moins majoritairement, de la silice ($SiO_2$). La silice utilisée peut être toute silice renforçante connue de l'homme du métier, notamment toute silice précipitée présentant une surface BET ainsi qu'une surface spécifique CTAB toutes deux inférieures à 450 $m^2/g$, même si les silices précipitées hautement dispersibles sont préférées. A titre encore plus préférentiel, la silice présente des surfaces spécifiques BET ou CTAB qui vont toutes deux de 70 à 250 $m^2/g$ et, de préférence, de 80 à 240 $m^2/g$.

La surface spécifique BET de la silice est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Perkasil KS 430 de la société Akzo, les silices BV 3380 et BV3370GR de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans le document de brevet européen EP-A-0 735 088.

D'autres silices qui sont non hautement dispersibles, telles que la silice Perkasil KS404 de la société Akzo et les silices Ultrasil VN2 ou VN3, peuvent aussi être utilisées.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

A titre de charge inorganique renforçante, on peut également utiliser, à titre non limitatif, des alumines (de formule $Al_2O_3$), telles que les alumines à dispersibilité élevée qui sont décrites dans le document de brevet européen EP-A-810 258, ou encore des hydroxydes d'aluminium, tels que ceux décrits dans le document de brevet international WO-A-99/28376.

Conviennent également, à titre de charge inorganique renforçante, les noirs de carbone modifiés par de la silice tels que, à titre non limitatif, les charges commercialisées par la société CABOT sous la dénomination « CRX 2000 », et qui sont décrites dans le document de brevet international WO-A-96/37547.

Dans le cas où le noir de carbone selon l'invention est utilisé en coupage avec une charge inorganique renforçante, la composition de caoutchouc selon l'invention peut comprendre en outre de manière classique un agent de liaison charge inorganique renforçante /matrice élastomère (encore appelé agent de couplage), qui a pour fonction d'assurer une liaison suffisante, de nature chimique et/ou physique, entre ladite charge inorganique et la matrice, tout en facilitant la dispersion de la charge inorganique au sein de la matrice.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée " Y-T-X ", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);

- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Des agents de couplage silice/élastomère, notamment, ont été décrits dans un grand nombre de documents, les plus connus étant des alkoxysilanes bifonctionnels tels que des alkoxysilanes polysulfurés. Comme alkoxysilanes polysulfurés, on citera plus particulièrement les polysulfures (notamment les disulfures, trisulfures ou tétrasulfures) de bis-(alkoxyl($C_1$-$C_4$)-alkyl($C_1$-$C_4$)silylalkyl($C_1$-$C_4$)), comme par exemple les polysulfures de bis(3-triméthoxysilylpropyl) ou de bis(3-triéthoxysilylpropyl). Parmi ces composés, on utilise notamment le tétrasulfure de bis (3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50 % en poids sur du noir de carbone), ou encore par la société Osi Specialties sous la dénomination Silquest A1289 (dans les deux cas, mélange commercial de polysulfures avec une valeur moyenne pour n proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774.

Les compositions conformes à l'invention peuvent réticuler sous l'action du soufre, des peroxydes ou de bismaléimides avec ou sans soufre. Elles peuvent également contenir les autres constituants habituellement utilisés dans les mélanges de caoutchouc, comme une charge inorganique conventionnelle non renforçante (par exemple de l'argile, de la bentonite, du talc, de la craie, du kaolin ou des oxydes de titane), des plastifiants, des pigments, des antioxydants, des agents de mise en oeuvre, des accélérateurs de réticulation tels que les dérivés du benzothiazole, la diphénylguanidine et, dans le cas présent de compositions de caoutchouc pour armature de carcasse prévues pour présenter une adhésion satisfaisante au métal, un sel de cobalt et/ou une association silice/ résine.

Les compositions conformes à l'invention peuvent être préparées selon des procédés connus de travail thermomécanique des constituants en une ou plusieurs étapes. On peut par exemple les obtenir par un travail thermo-mécanique dans un mélangeur interne, en une étape qui dure de 3 à 7 minutes avec une vitesse des palettes de 50 tours par minute, ou en deux étapes qui durent respectivement 3 à 5 minutes et 2 à 4 minutes, ce travail thermo-mécanique étant suivi d'un travail mécanique ou étape de finition effectué à 80° C, pendant lequel sont incorporés le soufre, les accélérateurs de vulcanisation (dans le cas d'une composition réticulée au soufre) et éventuellement ledit sel de cobalt.

Dans le cas où l'on utilise une charge organique renforçante de type système accepteur/donneur de méthylène dans la composition selon l'invention, le donneur de méthylène est seulement introduit lors de l'étape de travail mécanique, à la différence de l'accepteur de méthylène qui est introduit lors du travail thermo-mécanique.

L'armature de carcasse selon l'invention est de préférence telle que, dans le tissu composite utilisé à titre de nappe de carcasse poids-lourd ou génie civil, la densité des câbles métalliques est comprise entre 15 et 100 câbles par dm de nappe radiale et la distance entre deux câbles radiaux adjacents, d'axe en axe, est de préférence comprise entre 1 et 6 mm.

Dans une nappe de carcasse poids-lourd, cette densité de câbles est de préférence comprise entre 40 et 100 câbles par dm, plus préférentiellement entre 50 et 80 câbles par dm, et la distance entre deux câbles radiaux adjacents, d'axe en axe, est de préférence comprise entre 1,0 et 2,5 mm, plus préférentiellement entre 1,25 et 2 mm.

Dans une nappe de carcasse génie-civil, cette densité de câbles est de préférence comprise entre 15 et 70 câbles par dm, plus préférentiellement entre 20 et 35 câbles par dm, et la distance entre deux câbles radiaux adjacents, d'axe en axe, est de préférence comprise entre 2 et 6 mm, plus préférentiellement entre 2,5 et 5,5 mm.

Ces câbles selon l'invention sont de préférence disposés de telle manière que la largeur (notée "1") du pont de caoutchouc entre deux câbles adjacents soit comprise entre 0,25 mm et 1,5 mm. Dans une nappe de carcasse poids-lourd, la largeur 1 est plus préférentiellement comprise entre 0,25 et 1 mm et, dans une nappe de carcasse génie-civil, cette largeur 1 est plus préférentiellement comprise entre 0,25 et 1,5 mm.

Cette largeur 1 représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de défauts d'aspect sur les flancs des pneumatiques ou de pénétration d'objets, par perforation, entre les câbles.

Pour ces raisons, la largeur 1 est encore plus préférentiellement choisie comprise entre 0,35 et 0,85 mm, que ce soit pour une nappe de carcasse poids-lourd ou génie civil.

Egalement à titre préférentiel, la composition de caoutchouc de ce tissu composite présente, à l'état réticulé (i.e., après cuisson) et mesuré selon la norme ASTM D 412, un module sécant en extension M10 qui est inférieur à 12 MPa, plus préférentiellement compris entre 5 et 11 MPa. C'est dans un tel domaine de modules que l'on a enregistré le meilleur compromis d'endurance dans les tissus composites d'armature de carcasse.

Une enveloppe de pneumatique poids-lourd ou génie civil selon l'invention est telle qu'elle comporte cette armature de carcasse.

Cette enveloppe poids-lourd ou génie civil comporte de manière connue un sommet, deux flancs et deux bourrelets, chacun de ces bourrelets étant renforcé par une tringle. Le sommet est classiquement renforcé par une armature de sommet constituée par exemple d'au moins deux nappes croisées superposées, renforcées par des câbles métalliques. L'armature de carcasse est enroulée autour des deux tringles dans chaque bourrelet, le retournement de l'armature étant par exemple disposé vers l'extérieur du pneumatique.

L'armature de carcasse est constituée d'au moins une nappe renforcée par des câbles métalliques dits "radiaux", c'est-à-dire qu'ils sont disposés pratiquement parallèles les uns aux autres et s'étendent d'un bourrelet à l'autre en formant un angle compris entre 80° et 90° avec le plan circonférentiel médian (plan perpendiculaire à l'axe de rotation du pneumatique qui est situé à mi-distance des deux bourrelets et passe par le milieu de l'armature de sommet).

Les caractéristiques précitées de la présente invention, ainsi que d'autres, seront mieux comprises à la lecture de la description suivante de plusieurs exemples de réalisation de l'invention, donnés à titre illustratif et non limitatif.

Dans ces exemples, les propriétés des compositions sont évaluées comme suit :

Viscosité Mooney

La viscosité Mooney ML (1+4) est mesurée selon la norme ASTM D1646 (1999).

Dureté Shore A

La dureté Shore A est mesurée conformément à la norme ASTM D2240 (1997).

Modules d'allongement

On mesure les modules d'allongement à 10 % (M10) à la température de 23° C selon la norme ASTM D412 (1998) sur des éprouvettes ASTM C. Ce sont des modules sécants vrais en MPa, c'est à dire les modules sécants calculés en se ramenant à la section réelle de l'éprouvette à l'allongement donné.

Indices de cassage

Ces indices sont mesurés à 100° C. On détermine les propriétés à la rupture, contrainte rupture FR en MPa et allongement rupture AR en % selon la norme ASTM D412 (1998). Les mesures sont effectuées sur des éprouvettes ASTM C.

Indices de déchirabilité

Ces indices sont mesurés à 100° C. On détermine la force rupture (FRD) en N/mm d'épaisseur et l'allongement rupture (ARD) en % sur une éprouvette de dimensions 10 x 105 x 2,5 mm entaillée en son centre sur une profondeur de 5 mm.

Pertes hystérétiques (PH)

Elles sont mesurées en % par rebond à 60° C au sixième choc, selon la relation :

$$PH\,(\%) = 100 \text{ x } (W_0\text{-}W_1)/W_1, \text{ avec } W_0 : \text{énergie fournie et } W_1 : \text{énergie restituée.}$$

Propriétés dynamiques

Les caractéristiques dynamiques des matériaux sont réalisées sur une machine Schenck, selon la norme ASTM D 5992 (1996). On enregistre la réponse d'un échantillon de matériau vulcanisé (éprouvette cylindrique de 4 mm d'épaisseur et de 400 mm$^2$ de section), soumis à une sollicitation sinusoïdale en cisaillement simple alterné, à la fréquence de 10 Hz et à 60° C. On effectue un balayage en amplitude de déformation de 0,1 à 50 % (cycle aller), puis de 50 % à 0,1 % (cycle retour). On détermine au cycle aller le module de cisaillement maximum G*max en MPa et la valeur maximum de la tangente de l'angle de perte tg del max.

## EXEMPLES DE REALISATION DE L'INVENTION :

### 1) Première série d'exemples :

Ces exemples ont pour but de comparer entre elles des compositions à base de caoutchouc naturel (NR ci-après) renforcées avec du noir de carbone, selon des quantités de noir allant de 52 à 58 pce. Ces compositions sont détaillées dans le tableau 1 ci-après (en pce).

La composition 1 « témoin » est représentative de l'état de la technique connu, et elle comprend 52 pce de noir N347 à titre de charge renforçante.

Les compositions 2 à 7 selon l'invention comprennent un noir de carbone A pour les compositions 2 à 5, ou un noir de carbone B pour les compositions 6 et 7.

Le noir de carbone A est commercialisé sous la dénomination « CRX1416B » par la société CABOT, et le noir de carbone B est commercialisé sous la dénomination « EX 3-3 » par la société COLUMBIAN.

La composition 5 se différencie de la composition 4 en ce qu'elle comprend en outre un agent d'aide à la mise en oeuvre commercialisé par la société RHEIN CHEMIE sous le nom « AFLUX 42 », afin de réduire la viscosité de la composition 5 à l'état non réticulé).

Toutes ces compositions sont réticulables au soufre.

Tableau 1 :

|  | Comp. 1 | Comp. 2 | Comp. 3 | Comp. 4 | Comp. 5 | Comp. 6 | Comp. 7 |
|---|---|---|---|---|---|---|---|
| NR | 100 | 100 | 100 | 100 | 100 | 100 | 100 |
| Noir N347 | 52 |  |  |  |  |  |  |
| Noir A |  | 52 | 55 | 58 | 58 |  |  |
| Noir B |  |  |  |  |  | 55 | 58 |
| ZnO | 9 | 9 | 9 | 9 | 9 | 9 | 9 |
| Acide stéarique | 0,65 | 0,65 | 0,65 | 0,65 | 0,65 | 0,65 | 0,65 |
| Antioxydant | 1,50 | 1,50 | 1,50 | 1,50 | 1,50 | 1,50 | 1,50 |
| « AFLUX 42 » |  |  |  |  | 3 |  |  |
| Sel de cobalt * | 0,20 | 0,20 | 0,20 | 0,20 | 0,20 | 0,20 | 0,20 |
| Soufre insoluble | 7,6 | 7,6 | 7,6 | 7,6 | 7,6 | 7,6 | 7,6 |
| Accélérateur | 0,93 | 0,93 | 0,93 | 0,93 | 0,93 | 0,93 | 0,93 |
| * pce de cobalt métal | | | | | | | |

Le caoutchouc naturel (NR) qui est utilisé est peptisé et présente une viscosité Mooney ML (1+4) à 100 °C égale à 60.

L'antioxydant utilisé est la N-(1,3-diméthylbutyl)-N'-phényl-p-phénylènediamine. Les noirs de carbone utilisés sont détaillés dans le tableau 2 ci-dessous :

Tableau 2 :

|  | N347 | Noir A | Noir B |
|---|---|---|---|
| CTAB en $m^2/g$ | 88 | 55 | 50 |
| BET en $m^2/g$ | 88 | 53 | 50 |
| IA en mg/g | 90 | 62 | 56 |
| BET/ IA | 0,98 | 0,85 | 0,89 |
| DBP en ml/100 g | 124 | 134 | 130 |
| DBPC en ml/100 g | 100 | 94 | 88 |
| dst en nm | 77 | 131 | 133 |
| D50 en nm | 53 | 103 | 113 |
| D50/dst | 0,688 | 0,786 | 0,849 |

Ces compositions 1 à 7 sont obtenues en mélangeant tous les constituants précités, sauf le sel de cobalt, le soufre et l'accélérateur, par un travail thermomécanique dans un mélangeur interne en une étape qui dure 4 minutes avec une vitesse de rotation des palettes de 50 tours par minute, jusqu'à atteindre une température de tombée de 170° C, suivie d'une étape de finition effectuée à 80° C, pendant laquelle sont incorporés le sel de cobalt, le soufre et l'accélérateur de vulcanisation.

La réticulation est effectuée à 150° C pendant un temps suffisant pour atteindre 99 % du couple maximum au rhéomètre.

On a comparé entre elles les propriétés de ces compositions 1 à 7 à l'état réticulé et à l'état non réticulé. Les résultats sont consignés dans le tableau 3 ci-après.

Tableau 3 :

|  | Comp. 1 | Comp. 2 | Comp. 3 | Comp. 4 | Comp. 5 | Comp. 6 | Comp. 7 |
|---|---|---|---|---|---|---|---|
| ML (1+4) à 100° C | 52 | 52 | 55 | 58 | 52 | 48 | 52 |
| Shore | 80 | 78 | 80 | 81 | 81 | 77 | 79 |
| **M10 en MPa** | 9,13 | 7,67 | 8,03 | 8,94 | 9,49 | 8,27 | 8,92 |
| **en base 100** | **100** | **84** | **88** | **98** | **104** | **89** | **96** |
| **PH en %** | 22,85 | 17,13 | 17,13 | 18,05 | 18,96 | 16,85 | 18,00 |
| **en base 100** | **100** | **75** | **75** | **79** | **83** | **74** | **79** |
| G* max 60° C | 8,24 | 5,76 | 6,43 | 8,82 | 8,04 |  |  |
| en base 100 | 100 | 70 | 78 | 107 | 97 |  |  |
| Tg del max 60° C | 0,163 | 0,130 | 0,132 | 0,142 | 0,139 |  |  |
| en base 100 | 100 | 80 | 81 | 87 | 85 |  |  |
| Cassage 100 °C |  |  |  |  |  |  |  |
| FR en MPa | 16,0 | 14,7 | 14,1 | 15,1 | 14,1 | 14 | 14 |
| AR en % | 360 | 360 | 326 | 323 | 308 | 359 | 364 |
| Déchirabilité 100 °C |  |  |  |  |  |  |  |
| FRD en N / mm | 30 | 33 | 38 | 34 | 25 | 36 | 29 |
| ARD en % | 97 | 84 | 87 | 87 | 77 | 88 | 85 |

Il apparaît que les noirs de carbone A ou B confèrent aux compositions 4, 5 et 7 selon l'invention des propriétés hystérétiques à haute déformation (PH à 60° C) qui sont améliorées de 17 % à 21 % par rapport à celles de la composition « témoin » comprenant le noir N347, ces compositions selon l'invention présentant par ailleurs un module d'allongement à faible déformation (M10) qui est voisin de celui de ladite composition « témoin », ce qui rend ces compositions selon l'invention particulièrement bien adaptées pour être utilisées dans l'armature de carcasse de pneumatiques destinés à porter de lourdes charges.

On notera que les autres propriétés de ces compositions 4, 5 et 7 selon l'invention sont comparables à celles de ladite composition « témoin ».

On notera également que l'incorporation dans la composition 5 de l'agent d'aide à la mise en oeuvre confère à cette composition 5 une viscosité à l'état non réticulé et, par conséquent, une aptitude à la mise en oeuvre qui est analogue à celle de la composition « témoin », et pratiquement sans pénaliser les propriétés hystérétiques de cette composition 5.

**2) Seconde série d'exemples :**

Les exemples suivants ont pour but de comparer entre elles deux compositions de caoutchouc présentant chacune à l'état réticulé un module sécant en extension M10 de 6 MPa, qui sont toutes deux à base de caoutchouc naturel et qui comprennent respectivement deux différents noirs de carbone à titre de charge renforçante, selon une quantité de noir comprise entre 40 et 50 pce.

La première composition 8 est une composition « témoin » représentative de l'état de la technique connu, et elle comprend 45 pce de noir de carbone de dénomination « N326 ».

La seconde composition 9 est conforme à l'invention, et elle comprend 48 pce dudit noir de carbone A de dénomination « CRX1416B ».

Le tableau 4 ci-dessous recense les caractéristiques de ces noirs de carbone N326 et A.

Tableau 4 :

|  | N326 | Noir A |
|---|---|---|
| CTAB en m$^2$/g | 83 | 55 |
| BET en m$^2$/g | 84 | 53 |
| IA en mg/g | 82 | 62 |
| BET/ IA | 1,02 | 0,85 |
| DBP en ml/100 g | 72 | 134 |
| DBPC en ml/100 g | 69 | 94 |
| dst en nm | 72 | 131 |
| D50 en nm | 54 | 103 |
| D50/dst | 0,75 | 0,786 |

On notera que ce noir N326 est tel que D50/Dst ne satisfait pas à la condition précitée (vii) selon l'invention, puisque 0,75 est inférieur à 0,0090. CTAB + 0,19 = 0,937.

Les formulations de ces compositions 8 et 9 sont détaillées au tableau 5 ci-dessous.

Tableau 5 :

|  | Comp.8 | Comp. 9 |
|---|---|---|
| NR | 100 | 100 |
| Noir N326 | 45 |  |
| Noir A |  | 48 |
| ZnO | 7,50 | 7,50 |
| Acide stéarique | 0,90 | 0,90 |
| Antioxydant | 1,50 | 1,50 |
| Sel de cobalt * | 0,20 | 0,20 |
| Soufre insoluble | 5,60 | 5,60 |
| Accélérateur | 0,93 | 0,93 |
| * pce de cobalt métal | | |

Le caoutchouc naturel (NR) qui est utilisé est peptisé et présente une viscosité Mooney ML (1+4) à 100 °C égale à 60.

L'antioxydant utilisé est la N-(1,3-diméthylbutyl)-N'-phényl-p-phénylènediamine.

Ces compositions 8 et 9 sont obtenues en mélangeant tous les constituants précités, sauf le sel de cobalt, le soufre et l'accélérateur, par un travail thermomécanique dans un mélangeur interne en une étape qui dure 4 minutes avec une vitesse de rotation des palettes de 50 tours par minute, jusqu'à atteindre une température de tombée de 170° C, suivie d'une étape de finition effectuée à 80° C, pendant laquelle sont incorporés le sel de cobalt, le soufre et l'accélérateur de vulcanisation.

La réticulation est effectuée à 150° C pendant un temps suffisant pour atteindre 99 % du couple maximum au rhéomètre.

On a comparé entre elles les propriétés de ces compositions 8 et 9 à l'état réticulé et à l'état non réticulé. Les résultats sont consignés dans le tableau 6 ci-après.

Tableau 6 :

|  | Composition 8 | Composition 9 |
|---|---|---|
| ML (1+4) à 100° C | 89 | 85,5 |
| M10 en MPa en base 100 | 5,8 100 | 6,3 109 |

(suite)

|  | Composition 8 | Composition 9 |
|---|---|---|
| PH en % | 18,5 | 14,2 |
| en base 100 | 100 | 77 |
|  |  |  |
| Cassage à 100 °C : |  |  |
| FR en MPa | 17,5 | 15,0 |
| AR en % | 530 | 425 |
|  |  |  |
| Déchirabilité à 100 °C : |  |  |
| FRD en N / mm | 29,0 | 36,5 |
| ARD en % | 130 | 180 |

Il apparaît que le noir de carbone A confère à la composition 9 selon l'invention des propriétés hystérétiques à haute déformation (PH à 60° C) qui sont améliorées de 23 % (on passe de 18,5 % à 14,2 %) par rapport à celles de la composition « témoin » 8 comprenant le noir N326, cette composition 9 présentant par ailleurs un module d'allongement à faible déformation (M10) qui est voisin de celui de ladite composition 8, ce qui rend ladite composition 9 particulièrement bien adaptée pour être utilisée dans l'armature de carcasse de pneumatiques destinés à porter de lourdes charges. On notera que les autres propriétés de cette composition 9 selon l'invention sont comparables à celles de ladite composition « témoin » 8.

## 3) Troisième série d'exemples :

Les exemples suivants ont également pour but de comparer entre elles deux compositions de caoutchouc présentant chacune à l'état réticulé un module sécant en extension M10 de 6 MPa, qui sont toutes deux à base de caoutchouc naturel et qui comprennent respectivement deux différents noirs de carbone à titre de charge renforçante, selon une quantité de noir comprise entre 40 et 50 pce.
La première composition 10 est une composition « témoin » représentative de l'état de la technique connu, et elle comprend 47 pce de noir de carbone de dénomination « N326 ».
La seconde composition 11 est conforme à l'invention, et elle comprend, d'une part, 47 pce dudit noir de carbone A de dénomination « CRX1416B » et, d'autre part, 1 pce d'un donneur de méthylène et 2 pce d'un accepteur de méthylène à titre de charge organique renforçante.
Les formulations de ces compositions 10 et 11 sont détaillées au tableau 7 ci-dessous.

Tableau 7 :

|  | Composition 10 | Composition 11 |
|---|---|---|
| NR | 100 | 100 |
| Noir N326 | 47 |  |
| Noir A |  | 47 |
| ZnO | 7,5 | 9 |
| Acide stéarique | 0,9 | 0,5 |
| Antioxydant | 1,5 | 1,8 |
| Sel de cobalt* | 0,2 | 0,15 |
| "Accepteur de méthylène" |  | 2 |
| "Donneur de méthylène" |  | 1 |
| Soufre insoluble | 5,6 | 3,13 |
| Accélérateur | 0,93 | 0,6 |
| * pce de cobalt métal |  |  |

Le caoutchouc naturel (NR) qui est utilisé est peptisé et présente une viscosité Mooney ML(1+4) à 100°C égale à 60.
L'antioxydant utilisé est la N-(1,3-diméthylbutyl)-N'-phényl-p-phénylènediamine.
L'accepteur de méthylène est un résine phénolique « novolaque »commercialisée par la société INSPEC sous la dénomination « Penacolite B20 ».

Le donneur de méthylène est l'hexa-méthylènetétramine.

Ces compositions 10 et 11 sont obtenues en mélangeant tous les constituants précités, sauf le sel de cobalt, le soufre, l'accélérateur et le donneur de méthylène, par un travail thermo-mécanique dans un mélangeur interne en une étape qui dure 4 minutes avec une vitesse de rotation des palettes de 50 tours par minute, jusqu'à atteindre une température de tombée de 170° C, suivie d'une étape de finition effectuée à 80° C, pendant laquelle sont incorporés le sel de cobalt, le soufre, l'accélérateur de vulcanisation et le donneur de méthylène.

La réticulation est effectuée à 140° C pendant un temps suffisant pour atteindre 99 % du couple maximum au rhéomètre.

On a comparé entre elles les propriétés de ces compositions 10 et 11 à l'état réticulé et à l'état non réticulé. Les résultats sont consignés dans le tableau 8 ci-après.

Tableau 8 :

|  | Composition 10 | Composition 11 |
|---|---|---|
| ML (1+4) à 100° C | 78 | 94 |
| M10 en MPa | 5,9 | 5,8 |
| en base 100 | 100 | 98 |
| PH en % | 18,1 | 14,6 |
| en base 100 | 100 | 81 |
| Cassage à 100° C: | | |
| FR en MPa | 16,7 | 15,8 |
| AR en % | 490 | 500 |
| Déchirabilité à 100° C: | | |
| FRD en N/mm | 24,9 | 35.1 |
| ARD en % | 155 | 153 |

Il apparaît que le noir de carbone A confère à la composition 11 selon l'invention des propriétés hystérétiques à haute déformation (PH à 60° C) qui sont améliorées de 19 % (on passe de 18,1 % à 14,6 %) par rapport à celles de la composition « témoin » 10 comprenant le noir N326, cette composition 11 présentant par ailleurs un module d'allongement à faible déformation (M10) qui est voisin de celui de la composition 10, sans dégradation des propriétés de cohésion (cassage et déchirabilité), ce qui rend cette composition 11 selon l'invention particulièrement bien adaptée pour être utilisée dans l'armature de carcasse de pneumatiques destinés à porter de lourdes charges.

**Revendications**

**1.**   Armature de carcasse pour enveloppe de pneumatique destinée à porter de lourdes charges, telle qu'une enveloppe poids-lourd ou génie civil, ladite armature comportant un tissu composite qui comporte une composition de caoutchouc réticulable ou réticulée présentant une hystérèse réduite à l'état réticulé et des câbles métalliques renforçant ladite composition, laquelle comprend :

- une matrice élastomère comprenant du caoutchouc naturel ou un polyisoprène de synthèse à titre majoritaire, et
- une charge renforçante comprenant un noir de carbone,

**caractérisée en ce que** ledit noir de carbone satisfait à la fois aux conditions suivantes :

(i) 45 ≤ surface spécifique CTAB en m$^2$/g (selon la norme ASTM D3765-80) ≤ 70,
(ii) 45 ≤ surface spécifique BET en m$^2$/g (selon la norme ASTM D4820-93) ≤ 70,
(iii) 45 ≤ indice d'adsorption d'iode IA en mg/g (selon la norme ASTM D1510-81) ≤ 70
(iv) rapport (surface BET / indice IA) ≤ 1,07,
(v) 115 ≤ valeur de structure DBP en ml/ 100 g (selon la norme ASTM D2414-93) ≤ 170,
(vi) 85 nm ≤ diamètre de Stokes dst en nm ≤ 145,

où dst est le diamètre d'agrégats correspondant à la fréquence maximale des diamètres de Stokes dans une distribution d'agrégats, et

(vii) D50/dst $\geq$ 0,0090. CTAB + 0,19,

où D50 est la différence, dans la distribution d'agrégats, entre les diamètres de Stokes de deux agrégats correspondant à une même fréquence égale à 50 % de la fréquence maximale des diamètres de Stokes, dst et D50 étant mesurés par photo-sédimentométrie centrifuge.

2. Armature de carcasse selon la revendication 1, **caractérisée en ce que** ledit noir de carbone satisfait en outre à la condition suivante :

(viii) 80 $\leq$ valeur de structure DBPC en ml/ 100 g (selon la norme ASTM D3493-91) $\leq$ 130, la valeur DBPC étant mesurée après 4 compressions à (24 000 psi) 165 MPa.

3. Armature de carcasse selon la revendication 2, **caractérisée en ce que** ledit noir de carbone satisfait en outre à la condition suivante :

(ix) 85 $\leq$ valeur de structure DBPC en ml/ 100 g $\leq$ 125.

4. Armature de carcasse selon une des revendications précédentes, **caractérisée en ce que** ledit noir de carbone satisfait en outre aux conditions suivantes :

(x) 50 $\leq$ surface spécifique CTAB en m$^2$/g $\leq$ 65,
(xi) 50 $\leq$ surface spécifique BET en m$^2$/g $\leq$ 65,
(xii) 50 $\leq$ indice d'adsorption d'iode IA en mg/g $\leq$ 65.

5. Armature de carcasse selon une des revendications précédentes, **caractérisée en ce que** ledit noir de carbone satisfait en outre à la condition suivante :

(xiii) rapport (surface BET) / (indice IA) $\leq$ 1,05.

6. Armature de carcasse selon une des revendications précédentes, **caractérisée en ce que** ledit noir de carbone satisfait en outre à la condition suivante :

(xiv) 120 $\leq$ valeur de structure DBP en ml/ 100 g $\leq$ 165.

7. Armature de carcasse selon une des revendications précédentes, **caractérisée en ce que** ledit noir de carbone satisfait en outre à la relation suivante :

(xv) 90 nm $\leq$ diamètre de Stokes dst en nm $\leq$ 140.

8. Armature de carcasse selon une des revendications précédentes, **caractérisée en ce que** ledit noir de carbone satisfait en outre à la relation suivante :

(xvi) D50/dst $\geq$ 0,0092. CTAB + 0,21.

9. Armature de carcasse selon une des revendications 1 à 8, **caractérisée en ce que** la matrice élastomère est constituée de caoutchouc naturel ou de polyisoprène de synthèse.

10. Armature de carcasse selon une des revendications 1 à 8, **caractérisée en ce que** ladite matrice élastomère comprend un coupage de caoutchouc naturel ou de polyisoprène de synthèse avec au moins un élastomère diénique fonctionnel ou non appartenant au groupe constitué par les polybutadiènes, les copolymères de styrène et de butadiène préparés en solution ou en émulsion, les copolymères de butadiène et d'isoprène et les terpolymères de styrène, de butadiène et d'isoprène, le caoutchouc naturel ou le polyisoprène de synthèse étant présents dans ladite composition selon une quantité égale ou supérieure à 70 pce (pce : parties en poids pour cent parties d'élastomères).

11. Armature de carcasse selon une des revendications précédentes, **caractérisée en ce que** ledit noir de carbone est présent dans ladite charge renforçante selon une fraction massique supérieure à 50 % et inférieure ou égale à 100 %.

**12.** Armature de carcasse selon la revendication 11, **caractérisée en ce que** ledit noir de carbone est présent dans ladite charge renforçante selon une fraction massique allant de 70 % à 100 %.

**13.** Armature de carcasse selon la revendication 11 ou 12, **caractérisée en ce que** ladite charge renforçante comprend un coupage dudit noir de carbone et d'une charge inorganique renforçante, telle que de la silice.

**14.** Armature de carcasse selon une des revendications 11 à 13, **caractérisée en ce que** ladite charge renforçante comprend un coupage dudit noir de carbone et d'une charge organique renforçante comprenant un système donneur de méthylène/ accepteur de méthylène.

**15.** Armature de carcasse selon la revendication 14, **caractérisée en ce que** ladite composition comprend :

- entre 30 pce et 70 pce dudit noir de carbone,
- entre 1 pce et 10 pce dudit accepteur de méthylène, et
- entre 0,5 pce et 5 pce dudit donneur de méthylène.

**16.** Armature de carcasse selon la revendication 14 ou 15, **caractérisée en ce que** ledit accepteur de méthylène est une résine phénolique, telle qu'une résine phénolique novolaque.

**17.** Armature de carcasse selon une des revendications 14 à 16, **caractérisée en ce que** ledit donneur de méthylène est choisi dans le groupe constitué par l'hexaméthylènetétramine, l'hexaméthoxyméthylmélamine, l'hexaéthoxyméthylmélamine, les polymères de paraformaldéhyde, les dérivés N-méthylol de la mélamine, et les mélanges de ces composés.

**18.** Armature de carcasse selon une des revendications précédentes, **caractérisée en ce que** ledit tissu composite comporte lesdits câbles métalliques selon une densité de câbles comprise entre 15 et 100 câbles par dm de tissu.

**19.** Armature de carcasse selon la revendication 18, **caractérisée en ce que** la distance entre deux câbles radiaux adjacents, d'axe en axe, est comprise entre 1 et 6 mm.

**20.** Armature de carcasse selon la revendication 18 ou 19, **caractérisée en ce que** la largeur 1 du pont de caoutchouc entre deux câbles adjacents est comprise entre 0,25 et 1,5 mm.

**21.** Armature de carcasse selon la revendication 20, **caractérisée en ce que** ladite largeur 1 du pont de caoutchouc est comprise entre 0,35 et 0,85 mm.

**22.** Armature de carcasse selon une des revendications précédentes, **caractérisée en ce que** ladite composition de caoutchouc présente, à l'état réticulé et mesuré selon la norme ASTM D 412, un module sécant en extension M10 qui est inférieur à 12 MPa.

**23.** Armature de carcasse selon la revendication 22, **caractérisée en ce que** ladite composition de caoutchouc présente, à l'état réticulé et mesuré selon la norme ASTM D 412, un module sécant en extension M10 qui est compris entre 5 et 11 MPa.

**24.** Armature de carcasse selon une des revendications 18 à 23, **caractérisée en ce que** ladite densité de câbles est comprise entre 50 et 80 câbles par dm de tissu, ladite armature étant destinée à un pneumatique poids-lourd.

**25.** Armature de carcasse selon la revendication 24, **caractérisée en ce que** la distance entre deux câbles radiaux adjacents, d'axe en axe, est comprise entre 1,25 et 2 mm.

**26.** Armature de carcasse selon une des revendications 18 à 23, **caractérisée en ce que** ladite densité de câbles est comprise entre 20 et 35 câbles par dm de tissu, ladite armature étant destinée à un pneumatique génie-civil.

**27.** Armature de carcasse selon la revendication 26, **caractérisée en ce que** la distance entre deux câbles radiaux adjacents, d'axe en axe, est comprise entre 2,5 et 5,5 mm.

**28.** Enveloppe de pneumatique pour véhicule destiné à porter de lourdes charges, tel qu'un véhicule poids-lourd ou génie civil, **caractérisée en ce qu'**elle comporte une armature de carcasse selon une des revendications 1 à 23.

**29.** Enveloppe de pneumatique pour véhicule poids-lourd, **caractérisée en ce qu'**elle comporte une armature de carcasse selon la revendication 24 ou 25.

**30.** Enveloppe de pneumatique pour véhicule génie-civil, **caractérisée en ce qu'**elle comporte une armature de carcasse selon la revendication 26 ou 27.

**Claims**

**1.** A carcass reinforcement for a tyre which is intended to bear heavy loads, such as a heavy-vehicle or construction-machinery tyre, said reinforcement comprising a composite fabric which comprises a cross-linkable or cross-linked rubber composition having a reduced hysteresis in the cross-linked state and metal cables reinforcing said composition, which comprises:

- an elastomeric matrix comprising natural rubber or a synthetic polyisoprene in a majority proportion, and
- a reinforcing filler comprising a carbon black,

**characterised in that** said carbon black meets all of the following conditions:

(i) $45 \leq$ CTAB specific surface area in $m^2/g$ (in accordance with Standard ASTM D3765-80) $\leq 70$,
(ii) $45 \leq$ BET specific surface area in $m^2/g$ (in accordance with Standard ASTM D4820-93) $\leq 70$,
(iii) $45 \leq$ iodine adsorption index IA in mg/g (in accordance with Standard ASTM D1510-81) $\leq 70$
(iv) ratio (BET surface area / index IA) $\leq 1.07$,
(v) $115 \leq$ DBP structure value in ml/100 g (in accordance with Standard ASTM D2414-93) $\leq 170$,
(vi) $85$ nm $\leq$ Stokes diameter dst in nm $\leq 145$,
where dst is the diameter of aggregates corresponding to the maximum frequency of the Stokes diameters in a distribution of aggregates, and
(vii) D50/dst $\geq 0.0090$. CTAB + 0.19,
where D50 is the difference, in the distribution of aggregates, between the Stokes diameters of two aggregates corresponding to one and the same frequency equal to 50% of the maximum frequency of the Stokes diameters, dst and D50 being measured by centrifugal photosedimentometry.

**2.** A carcass reinforcement according to Claim 1, **characterised in that** said carbon black furthermore meets the following condition:

(viii) $80 \leq$ DBPC structure value in ml/100 g (in accordance with Standard ASTM D3493-91) $\leq 130$,
the value DBPC being measured after 4 compressions at (24,000 psi) 165 MPa.

**3.** A carcass reinforcement according to Claim 2, **characterised in that** said carbon black furthermore meets the following condition:

(ix) $85 \leq$ DBPC structure value in ml/100 g $\leq 125$.

**4.** A carcass reinforcement according to one of the preceding claims, **characterised in that** said carbon black furthermore meets the following conditions:

(x) $50 \leq$ CTAB specific surface area in $m^2/g \leq 65$,
(xi) $50 \leq$ BET specific surface area in $m^2/g \leq 65$,
(xii) $50 \leq$ iodine adsorption index IA in mg/g $\leq 65$.

**5.** A carcass reinforcement according to one of the preceding claims, **characterised in that** said carbon black furthermore meets the following condition:

(xiii) ratio (BET surface area) / (index IA) $\leq 1.05$.

**6.** A carcass reinforcement according to one of the preceding claims, **characterised in that** said carbon black furthermore meets the following condition:

(xiv) $120 \leq$ DBP structure value in ml/100 g $\leq 165$.

7.  A carcass reinforcement according to one of the preceding claims, **characterised in that** said carbon black furthermore meets the following condition:

    (xv) 90 nm $\leq$ Stokes diameter dst in nm $\leq 140$.

8.  A carcass reinforcement according to one of the preceding claims, **characterised in that** said carbon black furthermore meets the following condition:

    (xvi) D50/dst $\geq$ 0.0092. CTAB + 0.21.

9.  A carcass reinforcement according to one of Claims 1 to 8, **characterised in that** the elastomeric matrix comprises natural rubber or synthetic polyisoprene.

10. A carcass reinforcement according to one of Claims 1 to 8, **characterised in that** said elastomeric matrix comprises a blend of natural rubber or of synthetic polyisoprene with at least one diene elastomer, whether functional or not, belonging to the group consisting of polybutadienes, copolymers of styrene and butadiene prepared in solution or in emulsion, copolymers of butadiene and isoprene and terpolymers of styrene, butadiene and isoprene, the natural rubber or the synthetic polyisoprene being present in said composition in a quantity equal to or greater than 70 phr (phr : parts by weight per hundred parts of elastomers).

11. A carcass reinforcement according to one of the preceding claims, **characterised in that** said carbon black is present in said reinforcing filler in a mass fraction greater than 50% and less than or equal to 100%.

12. A carcass reinforcement according to Claim 11, **characterised in that** said carbon black is present in said reinforcing filler in a mass fraction of from 70% to 100%.

13. A carcass reinforcement according to Claim 11 or 12, **characterised in that** said reinforcing filler comprises a blend of said carbon black and a reinforcing inorganic filler, such as silica.

14. A carcass reinforcement according to one of Claims 11 to 13, **characterised in that** said reinforcing filler comprises a blend of said carbon black and a reinforcing organic filler comprising a methylene donor/methylene acceptor system.

15. A carcass reinforcement according to Claim 14, **characterised in that** said composition comprises:

    - between 30 phr and 70 phr of said carbon black,
    - between 1 phr and 10 phr of said methylene acceptor, and
    - between 0.5 phr and 5 phr of said methylene donor.

16. A carcass reinforcement according to Claim 14 or 15, **characterised in that** said methylene acceptor is a phenolic resin, such as a novolac phenolic resin.

17. A carcass reinforcement according to one of Claims 14 to 16, **characterised in that** said methylene donor is selected from the group consisting of hexamethylenetetramine, hexamethoxymethylmelamine, hexaethoxymethylmelamine, para-formaldehyde polymers, N-methylol melamine derivatives, and mixtures of these compounds.

18. A carcass reinforcement according to one of the preceding claims, **characterised in that** said composite fabric comprises said metal cables in a cable density of between 15 and 100 cables per dm of fabric.

19. A carcass reinforcement according to Claim 18, **characterised in that** the distance between two adjacent radial cables, from axis to axis, is of between 1 and 6 mm.

20. A carcass reinforcement according to Claim 18 or 19, **characterised in that** the width 1 of the rubber bridge between two adjacent cables is between 0.25 and 1.5 mm.

21. A carcass reinforcement according to Claim 20, **characterised in that** said width 1 of the rubber bridge is between 0.35 and 0.85 mm.

**22.** A carcass reinforcement according to one of the preceding claims, **characterised in that** said rubber composition has, in the cross-linked state and measured in accordance with Standard ASTM D 412, a secant tensile modulus M10 which is less than 12 MPa.

**23.** A carcass reinforcement according to Claim 22, **characterised in that** said rubber composition has, in the cross-linked state and measured in accordance with Standard ASTM D 412, a secant tensile modulus M10 which is of between 5 and 11 MPa.

**24.** A carcass reinforcement according to one of Claims 18 to 23, **characterised in that** said cable density is of between 50 and 80 cables per dm of fabric, said reinforcement being intended for a heavy-vehicle tyre.

**25.** A carcass reinforcement according to Claim 24, **characterised in that** the distance between two adjacent radial cables, from axis to axis, is of between 1.25 and 2 mm.

**26.** A carcass reinforcement according to one of Claims 18 to 23, **characterised in that** said cable density is of between 20 and 35 cables per dm of fabric, said reinforcement being intended for a construction-machinery tyre.

**27.** A carcass reinforcement according to Claim 26, **characterised in that** the distance between two adjacent radial cables, from axis to axis, is of between 2.5 and 5.5 mm.

**28.** A tyre for a vehicle intended to bear heavy loads, such as a heavy vehicle or construction machinery, **characterised in that** it comprises a carcass reinforcement according to one of Claims 1 to 23.

**29.** A tyre for a heavy vehicle, **characterised in that** it comprises a carcass reinforcement according to Claim 24 or 25.

**30.** A tyre for construction machinery, **characterised in that** it comprises a carcass reinforcement according to Claim 26 or 27.

**Patentansprüche**

**1.** Karkassenarmierung für einen Reifenmantel, der zum Tragen schwerer Lasten vorgesehen ist, wie ein Schwerlast- oder Tiefbaumantel, wobei die Armierung ein Verbundgewebe umfasst, das eine Zusammensetzung aus vernetzbarem oder vernetztem Kautschuk, der im vernetzten Zustand eine verringerte Hysterese aufweist, und metallische Drähte, die die Zusammensetzung verstärken, umfasst, wobei die Zusammensetzung Folgendes umfasst:

- eine elastomere Matrix, die vorwiegend Naturkautschuk oder ein synthetisches Polyisopren umfasst, und
- einen Verstärkungsfüllstoff, der Ruß umfasst, **dadurch gekennzeichnet, dass** der Ruß zugleich die folgenden Bedingungen erfüllt:

(i) $45 \leq$ spezifische CTAB-Oberfläche in $m^2/g$ (gemäß der Norm ASTM D3765-80) $\leq 70$,
(ii) $45 \leq$ spezifische BET-Oberfläche in $m^2/g$ (gemäß der Norm ASTM D4820-93) $\leq 70$,
(iii) $45 \leq$ Index der Iodadsorption IA in mg/g (gemäß der Norm ASTM D1510-81) $\leq 70$,
(iv) Verhältnis (BET-Oberfläche zu IA-Index) $\leq 1,07$,
(v) $115 \leq$ DBP-Strukturwert in ml/100 g (gemäß der Norm ASTM D2414-93) $\leq 170$,
(vi) 85 nm $\leq$ Stokes-Durchmesser dst in nm $\leq 145$,
wobei dst der Durchmesser von Aggregaten ist, der der maximalen Häufigkeit von Stokes-Durchmessern in einer Verteilung von Aggregaten entspricht, und
(vii) D50:dst $\geq 0,0090$, CTAB + 0,19,

wobei D50 der Unterschied zwischen den Stokes-Durchmessern von zwei Aggregaten in der Verteilung von Aggregaten ist, wobei die zwei Aggregate ein und derselben Häufigkeit entsprechen, die gleich 50 % der maximalen Häufigkeit von Stokes-Durchmessern sind, wobei dst und D50 mittels Zentrifugen-Photosedimentometrie gemessen werden.

**2.** Karkassenarmierung nach Anspruch 1, **dadurch gekennzeichnet, dass** der Ruß außerdem die folgende Bedingung erfüllt:

(viii) 80 ≤ DBPC-Strukturwert in ml/100 g (gemäß der Norm ASTM D3493-91) ≤ 130, wobei der DBPC-Wert nach 4 Druckbelastungen mit 165 MPa (24.000 psi) gemessen wird.

3. Karkassenarmierung nach Anspruch 2, **dadurch gekennzeichnet, dass** der Ruß außerdem die folgende Bedingung erfüllt:

   (ix) 85 ≤ DBPC-Strukturwert in ml/100 g ≤ 125.

4. Karkassenarmierung nach einem der vorhergehenden Ansprüche, **dadurch gekennzeichnet, dass** der Ruß außerdem die folgenden Bedingungen erfüllt:

   (x) 50 ≤ spezifische CTAB-Oberfläche in $m^2/g$ ≤ 65,
   (xi) 50 ≤ spezifische BET-Oberfläche in $m^2/g$ ≤ 65,
   (xii) 50 ≤ Index der Iodadsorption IA in mg/g ≤ 65.

5. Karkassenarmierung nach einem der vorhergehenden Ansprüche, **dadurch gekennzeichnet, dass** der Ruß außerdem die folgende Bedingung erfüllt: (xiii) Verhältnis (BET-Oberfläche) zu (IA-Index) ≤ 1,05.

6. Karkassenarmierung nach einem der vorhergehenden Ansprüche, **dadurch gekennzeichnet, dass** der Ruß außerdem die folgende Bedingung erfüllt: (xiv) 120 ≤ DBP-Strukturwert in ml/100 g ≤ 165.

7. Karkassenarmierung nach einem der vorhergehenden Ansprüche, **dadurch gekennzeichnet, dass** der Ruß außerdem die folgende Bedingung erfüllt: (xv) 90 nm ≤ Stokes-Durchmesser dst in nm ≤ 140.

8. Karkassenarmierung nach einem der vorhergehenden Ansprüche, **dadurch gekennzeichnet, dass** der Ruß außerdem die folgende Bedingung erfüllt: (xvi) D50:dst ≥ 0,0092, CTAB + 0,21.

9. Karkassenarmierung nach einem der Ansprüche 1 bis 8, **dadurch gekennzeichnet, dass** die elastomere Matrix aus Naturkautschuk oder synthetischem Polyisopren besteht.

10. Karkassenarmierung nach einem der Ansprüche 1 bis 8, **dadurch gekennzeichnet, dass** die elastomere Matrix einen Verschnitt von Naturkautschuk oder synthetischem Polyisopren mit mindestens einem funktionellen Dien-Elastomer umfasst, oder nicht zu der Gruppe gehört, die aus den Polybutadienen, den Styrol-Butadien-Copolymeren, die in Lösung oder in Emulsion hergestellt werden, den Butadien-Isopren-Copolymeren und den Styrol-Butadien-Isopren-Terpolymeren besteht, wobei der Naturkautschuk oder das synthetische Polyisopren in der Zusammensetzung in einer Menge vorliegen, die größer gleich 70 pce (pce: Gewichtsteile pro hundert Teile Elastomere) ist.

11. Karkassenarmierung nach einem der vorhergehenden Ansprüche, **dadurch gekennzeichnet, dass** der Ruß in dem Verstärkungsfüllstoff in einem Masseanteil vorliegt, der größer als 50 % und kleiner gleich 100 % ist.

12. Karkassenarmierung nach Anspruch 11, **dadurch gekennzeichnet, dass** der Ruß in dem Verstärkungsfüllstoff in einem Masseanteil vorliegt, der von 70 % bis 100 % reicht.

13. Karkassenarmierung nach Anspruch 11 oder 12, **dadurch gekennzeichnet, dass** der Verstärkungsfüllstoff einen Verschnitt des Rußes und eines anorganischen Verstärkungsfüllstoffs, wie Siliciumdioxid, umfasst.

14. Karkassenarmierung nach einem der Ansprüche 11 bis 13, **dadurch gekennzeichnet, dass** der Verstärkungsfüllstoff einen Verschnitt des Rußes und eines organischen Verstärkungsfüllstoffs, der ein Methylendonator-/Methylenakzeptorsystem umfasst, umfasst.

15. Karkassenarmierung nach Anspruch 14, **dadurch gekennzeichnet, dass** die Zusammensetzung Folgendes umfasst:

   - zwischen 30 pce und 70 pce des Rußes,
   - zwischen 1 pce und 10 pce des Methylenakzeptors und
   - zwischen 0,5 pce und 5 pce des Methylendonators.

16. Karkassenarmierung nach Anspruch 14 oder 15, **dadurch gekennzeichnet, dass** der Methylenakzeptor ein Phenolharz ist, wie ein Novalak-Phenolharz.

**17.** Karkassenarmierung nach einem der Ansprüche 14 bis 16, **dadurch gekennzeichnet, dass** der Methylendonator aus der Gruppe bestehend aus Hexamethylentetramin, Hexamethoxymethylmelamin, Hexaethoxymethylmelamin, den Paraformaldehyd-Polymeren, den N-Methylolderivaten des Melamins und den Gemischen dieser Verbindungen ausgewählt ist.

**18.** Karkassenarmierung nach einem der vorhergehenden Ansprüche, **dadurch gekennzeichnet, dass** der Verbundstoff die metallischen Drähte in einer Drahtdichte zwischen 15 und 100 Drähten pro dm Gewebe umfasst.

**19.** Karkassenarmierung nach Anspruch 18, **dadurch gekennzeichnet, dass** der Abstand von Achse zu Achse zwischen zwei benachbarten radialen Drähten zwischen 1 und 6 mm liegt.

**20.** Karkassenarmierung nach Anspruch 18 oder 19, **dadurch gekennzeichnet, dass** die Breite 1 der Kautschukbrücke zwischen zwei benachbarten Drähten zwischen 0,25 und 1,5 mm liegt.

**21.** Karkassenarmierung nach Anspruch 20, **dadurch gekennzeichnet, dass** die Breite 1 der Kautschukbrücke zwischen 0,35 und 0,85 mm liegt.

**22.** Karkassenarmierung nach einem der vorhergehenden Ansprüche, **dadurch gekennzeichnet, dass** die Kautschukzusammensetzung im vernetzten Zustand und gemäß der Norm ASTM D 412 gemessen ein Sekantenmodul bei Dehnung M10 aufweist, das kleiner als 12 MPa ist.

**23.** Karkassenarmierung nach Anspruch 22, **dadurch gekennzeichnet, dass** die Kautschukzusammensetzung im vernetzten Zustand und gemäß der Norm ASTM D 412 gemessen ein Sekantenmodul bei Dehnung M10 aufweist, das zwischen 5 und 11 MPa liegt.

**24.** Karkassenarmierung nach einem der Ansprüche 18 bis 23, **dadurch gekennzeichnet, dass** die Drahtdichte zwischen 50 und 80 Drähten pro dm Gewebe liegt, wobei die Armierung für einen Schwerlastreifen vorgesehen ist.

**25.** Karkassenarmierung nach Anspruch 24, **dadurch gekennzeichnet, dass** der Abstand von Achse zu Achse zwischen zwei benachbarten radialen Drähten zwischen 1,25 und 2 mm liegt.

**26.** Karkassenarmierung nach einem der Ansprüche 18 bis 23, **dadurch gekennzeichnet, dass** die Drahtdichte zwischen 20 und 35 Drähten pro dm Gewebe liegt, wobei die Armierung für einen Tiefbaureifen vorgesehen ist.

**27.** Karkassenarmierung nach Anspruch 26, **dadurch gekennzeichnet, dass** der Abstand von Achse zu Achse zwischen zwei benachbarten radialen Drähten zwischen 2,5 und 5,5 mm liegt.

**28.** Reifenmantel für ein Fahrzeug, das zum Tragen schwerer Lasten vorgesehen ist, wie ein Schwerlast- oder Tiefbaufahrzeug, **dadurch gekennzeichnet, dass** er eine Karkassenarmierung nach einem der Ansprüche 1 bis 23 umfasst.

**29.** Reifenmantel für ein Schwerlastfahrzeug, **dadurch gekennzeichnet, dass** er eine Karkassenarmierung nach Anspruch 24 oder 25 umfasst.

**30.** Reifenmantel für ein Tiefbaufahrzeug, **dadurch gekennzeichnet, dass** er eine Karkassenarmierung nach Anspruch 26 oder 27 umfasst.

**EP 1 549 703 B1**

**Documents brevets cités dans la description**

- JP 4274901 A
- JP 2103268 A
- WO 0210265 A
- EP 0735088 A
- EP 810258 A
- WO 9928376 A
- WO 9637547 A
- EP 0203774 W

**Littérature non-brevet citée dans la description**

- **BRUNAUER-EMMETT-TELLER.** *The Journal of the American Chemical Society,* Février 1938, vol. 60, 309